# NEW EUROPEAN PATENT SPECIFICATION

(11) **EP 1 870 198 B2**
(45) Date of publication and mention of the opposition decision: **02.10.2013**
(45) Mention of the grant of the patent: 20.10.2010
(21) Application number: 07110845.0
(22) Date of filing: 22.06.2007
(51) Int. Cl.: B23Q 1/00, B24B 41/04

(54) **Control system for balancing a machine tool with rotating tools**
Steuersystem Auswuchten einer Werkzeugmaschine mit sich drehenden Werkzeugen
Système de commande d'équilibrage d'une machine-outil avec outils rotatifs

(30) Priority: 23.06.2006 IT BO20060489
(43) Date of publication of application: 26.12.2007
(73) Proprietor: MARPOSS SOCIETA' PER AZIONI, 40010 Bentivoglio (BO) (IT)
(72) Inventor: Dondi, Valerio, 40013 Castel Maggiore BO (IT); Ruggeri, Alessandro, 40141 Bologna (IT)

(56) References cited:
- DE-A1- 10 013 612
- DE-A1- 10 032 073
- DE-A1- 10 244 857
- JP-A- 62 015 048
- US-A- 5 688 160
- US-A1- 5 688 160
- '"Auswuchten - Aktive Überwachung der Schwingungen an Schleifmaschinen" der Firma Marposs' October 2005,

## Description

### TECHNICAL FIELD

The present invention relates to a control system for the machining of mechanical pieces on a machine tool with a stationary part, a spindle rotating about a geometrical axis and tools including at least one grinding wheel and an associated grinding wheel center hub that is arranged inside the grinding wheel and is coupled in a removable way to the rotating spindle. The control system includes control devices and electrical connection elements between the stationary part and the control devices.

### BACKGROUND ART

There are known applications in grinding machines foreseeing the presence of balancing apparatuses. One kind of such apparatuses includes for example a balancing head housed in an axial opening of the grinding wheel center hub in a substantially coaxial position with respect to the axis of rotation of the spindle to which the grinding wheel is coupled. The balancing head includes balancing masses, the position of which is adjustable, and electric motors for causing the displacement of the masses.

Moreover a sensor, integral with the balancing head, or in any case arranged at the grinding wheel center hub, can be present for detecting ultrasonic acoustic emissions caused by the contact occurring between grinding wheel and workpiece being machined or between grinding wheel and dressing tool. Electrical signals generated by the sensor are utilized for controlling steps in the machining cycles. The signals provided by the acoustic sensor are transmitted to a part stationary with respect to the spindle - and afterwards transmitted to a display and processing unit - by means of a contactless bidirectional transmission system which can also allow transmitting checking and/or diagnostic signals relating to the balancing head (for example signals provided by other sensors detecting specific positions of the masses) to the stationary part and can also allow power supply and control signals - for the electric motors that manage displacements of the masses - to pass in the opposite sense.

The contactless bidirectional transmission system includes appropriate transceiver units coupled to the rotating part and to the stationary part, facing each other in coaxial positions with respect to the axis of rotation of the spindle. The rotating transceiver units can be arranged at the end of the spindle opposite to the end carrying the grinding wheel, and in this case the electrical connection with the balancing head and the acoustic sensor is achieved by means of a cable housed in the spindle.

An application with the previously mentioned features is described in patent no. US-A-5688160, where there is also mentioned the need to carry out balancing operations when the grinding wheel is replaced (col. 5, lines 11-13, 39), i.e. a new grinding wheel is mounted on the rotating spindle.

Some grinding machines foresee the replacement of the grinding wheel - and of the hub to which the grinding wheel is fixed - as the kind of workpiece and/or the kind of machining to carry out vary. In these applications, the balancing head and/or the acoustic sensor, housed in the grinding wheel center hub, are replaced along with the grinding wheel. In substance, the part rotating with the spindle is divided in two parts - one of which comprising the hub which carries the grinding wheel - and the electrical connection between the contactless transmission system and the machining control devices including the balancing head and the acoustic sensor cannot be carried out by a simple cable.

### DISCLOSURE OF THE INVENTION

An object of the present invention is to provide a control system for controlling the machining on a machine tool, for example a grinding machine, that includes control devices rotating with the grinding wheel and removable with it, and an electrical connection, particularly simple and reliable, between a stationary part and such control devices.

This and other objects are attained by a control system according to claim 1.

The use of the control system according to the invention is particularly advantageous when applied to machine tools including a replaceable grinding wheel, in which the replacement of the grinding wheel and of the grinding wheel center hub takes place in an automatic way by means of mechanical hands without the supervision of any operators.

### BRIEF DESCRIPTION OF THE DRAWINGS

The invention is hereinafter described with reference to the enclosed sheets of drawings, given by way of nonlimiting example only, wherein:
figure 1 is a cross-sectional view, shown in extremely simplified form, of some parts of a machine tool with rotating spindle, including a control system and a balancing apparatus according to the present invention;
figure 2 is a perspective view - in enlarged scale with respect to figure 1 - of a first component of the control system according to the invention;
figure 3 is a perspective view - in enlarged scale with respect to figure 1 - of a second component of the control system according to the invention.

### BEST MODE FOR CARRYING OUT THE INVENTION

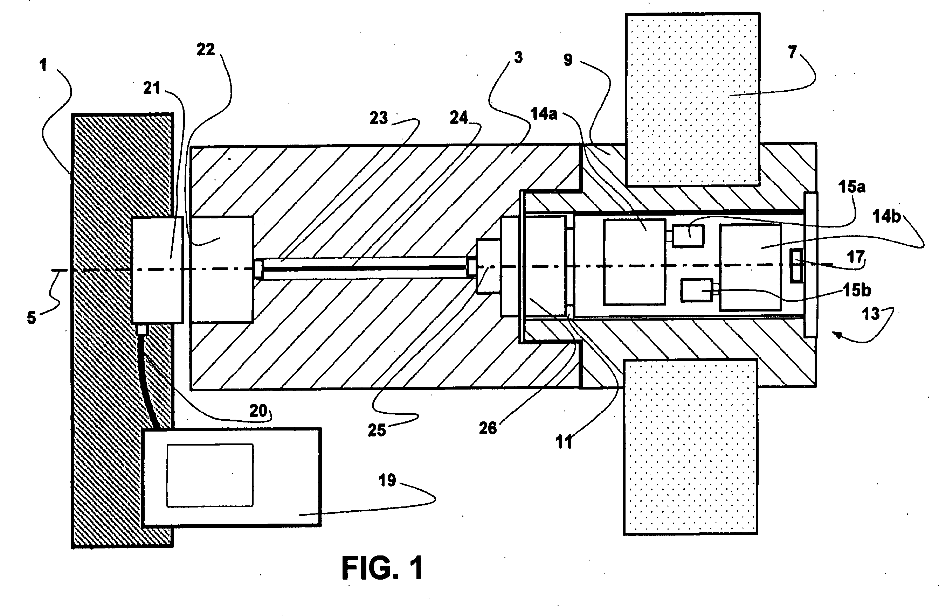

In the scheme of figure 1, the reference number **1** identifies the stationary part of a machine tool, for example a grinding machine with interchangeable grinding wheel for machining mechanical workpieces, while the reference number **3** identifies a spindle that can rotate with respect to the stationary part **1** about a geometrical axis **5.** A rotating tool includes a grinding wheel **7** coupled to an associated grinding wheel center hub **9,** and is fastened in a removable way to the spindle **3** through known means that are not shown in detail in the figure and include, for example, a conical coupling. The spindle **3** and the grinding wheel center hub **9** define the rotating part of the machine tool. An axial opening **11** in the hub **9** houses control devices, in particular components of a balancing apparatus, with a balancing head **13.** The balancing head 13, of a known type, includes balancing masses **14a** and **14b** eccentric with respect to the geometrical axis **5** and electric motors **15a** and **15b** for adjusting their angular position.

Another control device, in particular an acoustic sensor **17,** is also housed in the axial opening **11** of the hub **9.**

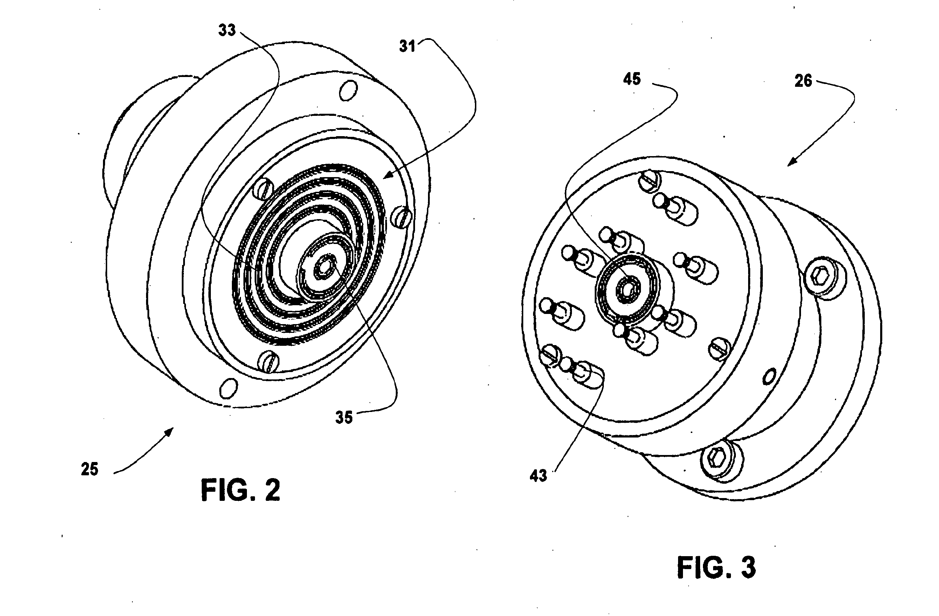

A processing unit **19,** that may be coupled to the stationary part **1** of the machine, is connected to the control devices located in the hub **9** by means of an electrical connection including various elements, and more specifically:
- a first electrical cable **20** in the stationary part **1,**
- a contactless bidirectional transmission system including transceiver units **21** and **22** coupled to the stationary part **1** and to the spindle **3,** respectively,
- a second electrical cable **24** housed in an axial opening **23** of the spindle **3,** and
- rapid coupling/uncoupling components **25** and **26** fixed, respectively, to the spindle **3** and to the hub **9** and that will be hereinafter described with reference to figures 2 and 3.

The contactless bidirectional transmission system (units **21** and **22)** is realized in a known way, for example according to one of the two alternatives described in the previously mentioned patent no. US-A-5688160, and it is not herein described in detail.

The second electrical cable **24** is preferably a coiled cable (per se known and not shown in the scheme of figure 1) that can be stretched inside the spindle **3,** so facilitating the assembling of transmission components without introducing substantial out-of-balance.

The component **25** coupled to the spindle **3,** shown in figure 2, includes a printed circuit board **31** with electrical contacts realized by means of circular tracks **33,** made of conductive material and concentric with respect to the geometrical axis **5,** and windings **35.**

The component **26** coupled to the hub **9,** shown in figure 3, is in direct electrical connection with the balancing head **13** and the acoustic sensor **17** and carries electrical contacts, more specifically pins **43 -** made of conductive material - recoiling along directions parallel to the geometrical axis **5** by means of springs not shown, and windings **45.**

The pins **43** are coupled to the motors **15a** and **15b** and, when the hub **9** is coupled to the spindle **3,** contact the tracks **33** for transmitting to the balancing head 13 power supply and control signals for such motors, for controlling the displacement of the balancing masses **14a, 14b**. In the illustrated example, for increasing the system reliability, two pins **43** are foreseen for the electrical connection with each of the four tracks **33.**

The windings **45** and **35** are designed to face each other when the hub **9** is coupled to the spindle **3,** and realize the primary and the secondary circuit, respectively, of an inductive, wide band, transformer coupling that is utilized to transfer signals provided by the acoustic sensor **17.**

The contactless inductive transmission realized by means of the transformer coupling enables to transfer a signal with a very low power level as that one, not amplified, of the acoustic sensor **17,** with extremely high reliability even in presence of a possible pollution caused by coolant in the area of the contacts.

The signal amplitude dumping caused by the inductive transmission is compensated in a known way by means of an amplifier located in the back side of the printed circuit board **31** and not visible in the figure.

In the above-described system the electrical connection between the rapid coupling/uncoupling components **25** and **26** is automatically guaranteed when the hub **9** carrying the grinding wheel **7** is coupled to the spindle **3.** The particular axial symmetry of the different elements (windings **35** and **45;** tracks **33)** guarantees the electrical connection independently of the mutual angular arrangement of the hub **9** and the spindle **3.**

Therefore, the coupling operations between hub **9** and spindle **3** are easy, and the system is extremely reliable, allowing the use of mechanical hands not supervised by the machine operator for the drawing from the storage magazine and the automatic replacement of the grinding wheel **7** with its associated grinding wheel center hub **9** in the spindle **3** of the machine tool.

After having coupled the grinding wheel **7** and its associated hub **9** to the spindle **3,** the system operations are per se known and herein only mentioned: the displacement of the balancing masses **14a, 14b** is activated by the motors **15a, 15b,** the power supply of which is controlled by the processing unit **19** on the basis of signals of a vibration sensor (per se known and not shown in the drawings) checking the balancing conditions of the movable part of the machine tool. The signal of the acoustic sensor **17,** or contact signal, is in turn transmitted to the processing unit **19** for signalling the contact between the grinding wheel **7** and a mechanical part (a workpiece to be machined or a dressing tool), and consequently varying, for example, the feed rate between the grinding wheel **7** and the mechanical part.

Control systems with constructive features that are different with respect to the system herein before described are within the scope of the present invention.

For example, the components **25** and **26** can be changed with each other, i.e. the component **25** with the concentric tracks **33** can be coupled to the hub **9,** while the component **26** with the recoiling pins **43** can be coupled to the spindle **3.** Moreover, the components **25** and **26** could have different characteristics, and carry pins **43** recoiling along radial directions and circular tracks **33** laying side by side on an external or internal cylindrical wall, respectively. The embodiment with tracks **33** on an internal cylindrical wall can be advantageously utilized in machine tools with high speed rotation spindles, so increasing the already considerable reliability of the electrical contact thanks to the centrifugal force action.

A control system according to the present invention must not necessarily include both the balancing head **13** and the acoustic sensor **17,** and a single control device can be present. Likewise, more control devices, similar or different to the ones described above, can be associated with the rotating tool.

The system can be advantageously utilized in machine tools including rotating tools different from a grinding wheel, such tools being also equipped with control devices like balancers and/or vibration acoustic sensors.

## Claims

1. Control system for the machining of mechanical pieces on a machine tool with a stationary part (1), a spindle (3) rotating about a geometrical axis (5) and tools (7,9) including at least one grinding wheel (7) and an associated grinding wheel center hub (9) that is arranged inside the grinding wheel (7) and is coupled in a removable way to the rotating spindle (3),
the control system includes control devices (13,17) and electrical connection elements (20,21,22,24,25,26) between the stationary part (1) and the control devices (13,17);
**characterized in that**
the control devices (13,17) are integral with said tools (7,9) to be removable with the grinding wheel (7), are housed in an axial opening (11) in the grinding wheel center hub (9), and include a balancing head (13) housed in the grinding wheel center hub (9);
said electrical connection elements including rapid coupling/uncoupling components (25,26) between the rotating spindle (3) and said control devices (13,17) and fixed, respectively, to the spindle (3) and to the grinding wheel center hub (9) so that the electrical connection between the rapid coupling/uncoupling components (25,26) is automatically guaranteed when the grinding wheel center hub (9) carrying the grinding wheel (7) and the control devices (13, 17) is coupled to the spindle (3).

2. The control system according to claim 1, further including a processing unit (19) connected to said control devices (13,17) through the electrical connection elements (20,21,22,24,25,26).

3. The control system according to claim 2, wherein the balancing head (13) includes balancing masses (14a,14b) the positions of which are adjustable and electrical motors (15a,15b) for displacing the balancing masses (14a, 14b), said electrical connection elements (20,21,22,24,25,26) being adapted to transmit power supply signals for the power supply of said electric motors (15a, 15b).

4. The control system according to claim 3, wherein said rapid coupling/uncoupling components (25,26) between the rotating spindle (3) and the control devices (13,17) include electrical contacts with recoiling pins (43) and tracks (33) made of conductive material adapted to mutually contact for providing the electrical connection.

5. The control system according to claim 4, wherein said recoiling pins (43) are recoilable along directions substantially parallel to said geometrical axis (5).

6. The control system according to any one of claim 4 or claim 5, wherein said tracks (33) are concentric with respect to the geometrical axis (5).

7. The control system according to any one of claims 4 to 6, wherein said electrical contacts are adapted to transmit said power supply signals.

8. The control system according to any one of claims 2 to 7, wherein the control devices integral with said grinding wheel (7) include an acoustic sensor (17) adapted to provide contact signals, indicative of the contact between the grinding wheel and a mechanical part, said electrical connection elements (20,21,22,24,25,26) being adapted to enable the transmission of the contact signals to the processing unit (19).

9. The control system according to claim 8, wherein said rapid coupling/uncoupling components (25,26) between the rotating spindle (3) and the control devices (13,17) include windings (35,45) of a transformer coupling, for providing the electrical connection and enabling the transmission of the contact signals to the processing unit (19).

10. The control system according to any one of the preceding claims, wherein the electrical connection elements (20,21,22,24,25,26) further include a contactless bidirectional transmission system (21,22) between the stationary part (1) and the rotating spindle (3).

11. The control system according to any one of claims 4 to 7, wherein the tracks (33) are circular.

12. The control system according to claim 8 as dependent upon claim 3, wherein the balancing head (13) and the acoustic sensor (17) are housed in an axial opening of the rotating tool (7,9), said acoustic sensor (17) being electronically connected to the processing unit (19).

## Patentansprüche

1. Steuersystem zur Bearbeitung von Werkstücken an einer Werkzeugmaschine mit einem ortsfesten Teil (1), einer um eine geometrische Achse (5) sich drehenden Spindel (3) und Werkzeugen (7,9), die mindestens eine Schleifscheibe (7) und eine innerhalb der Schleifscheibe (7) angeordnete und mit der sich drehenden Spindel (3) abnehmbar verbundene entsprechende Nabe (9) der Schleifscheibe umfassen, wobei das Steuersystem Steuervorrichtungen (13,17) und elektrische Anschlusselemente (20,21,22,24,25,26) zwischen dem ortsfesten Teil (1) und den Steuervorrichtungen (13,17) umfasst,
**dadurch gekennzeichnet dass**
die Steuervorrichtungen (13,17) mit den Werkzeugen (7,9) einteilig und mit der Schleifscheibe (7) abnehmbar sind, in einer Axialöffnung in der Nabe (9) der Schleifscheibe angeordnet sind, und einen in der Nabe (9) der Schleifscheibe angeordneten Wuchtkopf (13) umfassen,
wobei die elektrische Anschlusselemente zwischen der sich drehenden Spindel (3) und den Steuervorrichtungen (13,17) und an der Spindel (3) beziehungsweise an der Nabe (9) der Schleifscheibe befestigten Schnellkupplungs-/Schnellauskupplungs-Bauteile (25,26) aufweisen, sodass der elektrischen Anschluss zwischen den Schnellkupplungs-/Schnellauskupplungs-Bauteilen (25,26) automatisch garantiert ist, als die die Schleifscheibe (7) und die Steuervorrichtungen (13,17) tragende Nabe (9) der Schleifscheibe mit der Spindel (3) verbunden ist.

2. Steuersystem nach Anspruch 1, das ferner eine durch die elektrischen Anschlusselemente (20,21,22,24,25,26) mit den Steuervorrichtungen (13,17) verbundene Verarbeitungseinheit (19) besitz.

3. Steuersystem nach Anspruch 2, bei dem der Wuchtkopf (13) Wuchtmassen (14a,14b), deren Positionen verstellbar sind, und zur Verschiebung der Wuchtmassen (14a,14b) Elektromotoren (15a,15b) aufweist, wobei die elektrischen Anschlusselemente (20,21,22,24,25,26) zur Versorgung der Elektromotoren (15a,15b) Versorgungssignale übertragen können.

4. Steuersystem nach Anspruch 3, bei dem die Schnellkupplungs-/Schnellauskupplungs-Bauteile (25,26) zwischen der sich drehenden Spindel (3) und den Steuervorrichtungen (13,17) elektrische Kontakte mit zurückspringenden Bolzen (43) und Leiterzüge (33) aufweisen, die zur Bereitstellung des elektrischen Anschlusses wechselseitig berühren können.

5. Steuersystem nach Anspruch 4, bei dem die zurückspringenden Bolzen (43) entlang Richtungen zurückspringen können, die zur geometrischen Achse (5) wesentlich parallel sind.

6. Steuersystem nach einem der Ansprüche 4 oder 5, bei dem die Leiterzüge (33) in Bezug auf die geometrische Achse (5) konzentrisch sind.

7. Steuersystem nach einem der Ansprüche von 4 bis 6, bei dem die elektrischen Kontakte die Versorgungssignale übertragen können.

8. Steuersystem nach einem der Ansprüche von 2 bis 7, bei dem die mit der Schleifscheibe (7) einteiligen Steuervorrichtungen einen akustischen Sensor (17) aufweisen, der die Berührung zwischen der Schleifscheibe und einem mechanischen Teil anzeigende Berührungssignale bereitstellen kann; wobei die elektrischen Anschlusselemente (20,21,22,24,25,26) die Übertragung der Berührungssignale an der Verarbeitungseinheit (19) ermöglichen können.

9. Steuersystem nach Anspruch 8, bei dem die Schnellkupplungs-/Schnellauskupplungs-Bauteile (25,26) zwischen der sich drehenden Spindel (3) und den Steuervorrichtungen (13,17) Wicklungen (35,45) einer Transformatorkopplung aufweisen, um den elektrischen Anschluss zu bereitstellen und um die Übertragung der Berührungssignale an der Verarbeitungseinheit (19) zu ermöglichen.

10. Steuersystem nach einem der vorangehenden Ansprüche, bei dem die elektrischen Anschlusselemente (20,21,22,24,25,26) ferner ein bidirektionales kontaktloses Übertragungssystem (21,22) zwischen dem ortsfesten Teil (1) und der sich drehenden Spindel (3) umfassen.

11. Steuersystem nach einem der Ansprüche von 4 bis 7, bei dem die Leiterzüge (33) ringförmig sind.

12. Steuersystem nach Anspruch 8, wenn von Anspruch 3 abhängig, bei dem der Wuchtkopf (13) und der akustische Sensor (17) in einer axialen Öffnung des sich drehenden Werkzeugs (7,9) angeordnet sind, wobei der akustische Sensor (17) mit der Verarbeitungseinheit (19) elektronisch verbunden ist.

## Revendications

1. Système de commande pour l'usinage de pièces mécaniques sur une machine-outil avec une partie fixe (1), une broche (3) qui tourne autour d'un axe géométrique (5), et des outils (7,9) qui incluent au moins une meule (7) et un moyeu porte-meule (9) associé qui est agencé à l'intérieur de la meule (7) et couplé à la broche rotative (3) de façon amovible,
le système de commande inclut des dispositifs de commande (13,17) et des éléments de connexion électrique (20,21,22,24,25,26) entre la partie fixe (1) et les dispositifs de commande (13,17);
**caractérisé en ce que**
les dispositifs de commande (13,17) sont solidaires desdits outils (7,9) et sont détachables avec la meule (7), sont logés dans une ouverture axiale (11) dans le moyeu porte-meule (9) et incluent une tête d'équilibrage (13) logée dans le moyeu porte-meule (9),
lesdits éléments de connexion électrique incluant des composants de couplage/découplage rapide (25,26) entre la broche rotative (3) et lesdits dispositifs de commande (13,17) et fixés, respectivement, à la broche (3) et au moyeu porte-meule (9) de sorte que la connexion électrique entre les composants de couplage/découplage rapide (25,26) est garanti automatiquement lorsque le moyeu porte-meule (9), qui porte la meule (7) et les dispositifs de commande (13,17), est relié à la broche (3).

2. Système de commande selon la revendication 1 qui inclut en outre une unité d'élaboration (19) reliée auxdits dispositifs de commande (13,17) au moyen des éléments de connexion électrique (20,21,22,24,25,26).

3. Système de commande selon la revendication 2, dans lequel la tête d'équilibrage (13) inclut des masse d'équilibrage (14a, 14b), dont les positions sont réglables, et des moteurs électriques (15a, 15b) destinés à déplacer les masses d'équilibrage (14a, 14b), lesdits éléments de connexion électrique (20,21,22,24,25,26) étant adaptés à transmettre des signaux d'alimentation pour alimenter lesdits moteurs électriques (15a,15b).

4. Système de commande selon la revendication 3, dans lequel lesdits composants de couplage/découplage rapide (25,26) entre la broche rotative (3) et les dispositifs de commande (13,17) incluent des contacts électriques avec des tiges reculantes (43) et des pistes (33) fabriquées en matériel conducteur qui sont adaptés à se contacter réciproquement pour réaliser la connexion électrique.

5. Système de commande selon la revendication 4, dans lequel lesdites tiges reculantes (43) peuvent reculer dans des directions qui sont essentiellement parallèles audit axe géométrique (5).

6. Système de commande selon l'une quelconque des revendications 4 ou 5, dans lequel lesdites pistes (33) sont concentriques par rapport à l'axe géométrique (5).

7. Système de commande selon l'une quelconque des revendications de 4 à 6, dans lequel lesdits contacts électriques sont destinés à transmettre lesdits signaux d'alimentation.

8. Système de commande selon l'une quelconque des revendications de 2 à 7, dans lequel les dispositifs de commande solidaires de ladite meule (7) incluent un capteur acoustique (17) destiné à fournir des signaux de contact indiquant le contact entre la meule et une partie mécanique, lesdits éléments de connexion électrique (20,21,22,24,25,26) étant adaptés à permettre la transmission des signaux de contact à l'unité d'élaboration (19).

9. Système de commande selon la revendication 8, dans lequel lesdits composants de couplage/découplage rapide (25,26) entre la broche rotative (3) et les dispositifs de commande (13,17) incluent des enroulements (35,45) d'un couplage par transformateur pour réaliser la connexion électrique et permettre la transmission des signaux de contact à l'unité d'élaboration (19).

10. Système de commande selon l'une quelconque des revendications précédentes, dans lequel les éléments de connexion électrique (20,21,22,24,25,26) incluent en outre un système de transmission bidirectionnel sans contact (21,22) entre la partie fixe (1) et la broche rotative (3).

11. Système de commande selon l'une quelconque des revendications de 4 à 7, dans lequel les pistes (33) sont circulaires.

12. Système de commande selon la revendication 8 lorsqu'elle dépende de la revendication 3, dans lequel la tête d'équilibrage (13) et le capteur acoustique (17) sont logés dans une ouverture axiale de l'outil rotatif (7,9), ledit capteur acoustique (17) étant connecté électriquement à l'unité d'élaboration (19).
